# EUROPÄISCHE PATENTSCHRIFT

(11) **EP 1 995 610 B1**
(45) Veröffentlichungstag und Bekanntmachung des Hinweises auf die Patenterteilung: **27.01.2016**
(21) Anmeldenummer: 08007502.1
(22) Anmeldetag: 17.04.2008
(51) Int. Cl.: G01V 8/20

(54) **Optoelektronische Sensoranordnung**
Optoelectronic sensor assembly
Dispositif de capteur optoélectronique

(30) Priorität: 21.05.2007 DE 202007007290 U
(43) Veröffentlichungstag der Anmeldung: 26.11.2008
(73) Patentinhaber: SICK AG, 79183 Waldkirch (DE)
(72) Erfinder: Klingelhöfer, Christian, 79110 Freiburg (DE); Schleinkofer, Hannes, 79312 Emmendingen (DE); Schmitz, Stephan Dr., 79108 Freiburg (DE); Wüstefeld, Martin, 79350 Sexau (DE); Zwölfer, Ulrich, 79341 Kenzingen (DE)
(74) Vertreter: Westphal, Mussgnug & Partner Patentanwälte mbB

(56) Entgegenhaltungen:
- EP-A- 0 712 804
- DE-A1- 4 305 559
- DE-A1- 10 142 161
- DE-A1- 10 229 408
- DE-A1-102005 030 829
- DE-U1-202007 007 290
- US-A- 4 384 201

## Beschreibung

Die Erfindung betrifft eine optoelektronische Sensoranordnung gemäß dem Oberbegriff des Schutzanspruchs 1.

Bekannt sind optoelektronische Sensoranordnungen mit wenigstens zwei Lichtsendern zum Aussenden von Licht in einen Überwachungsbereich, mit wenigstens zwei Lichtempfängern zum Empfang von Licht aus dem Überwachungsbereich und zur Erzeugung von Empfangssignalen und mit einer Auswerteeinheit zum Auswerten der Empfangssignale. Mit derartigen optoelektronischen Sensoranordnungen kann der Überwachungsbereich darauf hin überwacht werden, ob dieser von Objekten in einer Bewegungsrichtung durchquert wird, wobei die Lichtsender und die Lichtempfänger jeweils quer zur Bewegungsrichtung nebeneinander angeordnet sind. Mit derartigen Lichtgittern, die sowohl als Einweglichtgitter als auch als Reflektionslichtgitter ausgebildet sein können, können jedoch keine dynamischen Auswertungen von Objektbewegungen vorgenommen werden. Um derartige Auswertungen vornehmen zu können, werden entweder zusätzliche Lichtgitter, Lichtgitter in platzraubender Anordnung oder zusätzliche Messgeräte oder Sensorik benötigt. Die bekannten Lichtgitter können lediglich die Strahlenintensität feststellen und ein Signal ausgeben, ob ein Objekt in den Überwachungsbereich eingedrungen ist, nicht jedoch die Richtung oder die Geschwindigkeit angeben, aus der bzw. mit der der von den Lichtsendern ausgesandte Lichtstrahl unterbrochen oder wieder freigegeben wird.

Weiterhin bekannt sind optoelektronische Sicherheitssensoren, welche einen Überwachungsbereich auf Eindringen von Objekten überwachen und in Abhängigkeit davon ein Schaltsignal ausgeben, welches dazu verwendet wird, eine Anlage oder eine Maschine bei Eintreten einer Sicherheitsanforderung in einen sicheren Zustand zu überführen. Diese Sicherheitssensoren ermitteln, wenn sich eine Person einer Anlage oder einer Maschine nähert und insbesondere einen kritischen Sicherheitsabstand unterschreitet, so dass in diesem Fall die Maschine oder Anlage angehalten oder zumindest mit verminderter Vertriebsgeschwindigkeit betrieben wird. Diese Sicherheitssensoren sind als sichere Sensoren im Sinne von Maschinensicherheit ausgebildet, was bedeutet, dass sichere Sensoren oder die mit ihnen verbundenen Auswerte- und/oder Steuereinheiten den einschlägigen Normen EN 954 oder EN 61508, welche sich mit der Maschinensicherheit befassen, genügen müssen, beispielsweise eine zweikanalige Struktur, Teststrukturen oder sich selbst überprüfende Strukturen aufweisen müssen oder auf sonstige Art und Weise in der Lage sein müssen, auch bei auftretenden Fehlern weiterhin zuverlässig zu funktionieren und die Fehler selbständig zu erkennen. Gerade bei derartigen Sicherheitssensoren ist es von höchster Relevanz, nicht nur zu detektieren, dass eine Person sich einer Maschine nähert und einen Sicherheitsabstand unterschreitet, sondern insbesondere auch zu ermitteln, aus welcher Richtung und mit welcher Geschwindigkeit sich die Person dieser Maschine oder Anlage annähert, um die Gefahr bringenden Bewegungen der Anlage oder Maschine entsprechend zu steuern, zu vermindern oder ganz anzuhalten. Insbesondere wenn sich eine Person mit hoher Geschwindigkeit einer Maschine oder Anlage nähert, muss diese entsprechend schnell in einen sicheren Zustand überführt werden, so dass zu keiner Zeit eine Gefahr für die entsprechende Person besteht.

Die DE 101 42 161 A1 offenbart einen optelektronischen Sensor mit einem Lichtsender zum Aussenden von Sendelicht und einem Lichtempfänger zum Empfang von Sendelicht und zur Erzeugung von entsprechenden Empfangssignalen und einer Auswerteeinrichtung zur Auswertung der Empfangssignale. Der Lichtempfänger weist wenigstens zwei Empfangselemente auf, welche im Wesentlichen parallel zu einer Bewegungsrichtung angeordnet sind, wobei die Auswerteeinheit eine Vergleichseinrichtung zum Vergleich einer Differenz der Empfangssignale der Empfangselemente mit wenigstens einem Schwellwert aufweist. Dadurch ermöglich es dieser optoelektronische Sensor, die Bewegungsrichtung eines Objekts zu bestimmen. Die Bestimmung der Bewegungsgeschwindigkeit wird auch mit diesem optoelektronischen Sensor nicht ermöglicht. Zudem überwacht dieser optoelektronische Sensor keinen Raumbereich, da er lediglich einen Lichtsender und einen Lichtempfänger aufweist.

Als weiterer Stand der Technik wird die DE 43 05 559 A1 genannt.

Die Aufgabe der Erfindung besteht daher darin, eine optoelektronische Sensoranordnung bereitzustellen, welche dynamische Auswertungen von Objektbewegungen ermöglicht und dabei weiterhin platzsparend ausgebildet und kostengünstig herzustellen.

Die Aufgabe wird erfindungsgemäß gelöst durch eine optoelektronische Sensoranordnung mit den Merkmalen des Schutzanspruchs 1.

Vorteilhafte Ausgestaltungen und Weiterbildungen der Erfindung sind in den Unteransprüchen angegeben.

Bei der erfindungsgemäßen optoelektronischen Sensoranordnung weist jeder Lichtempfänger wenigstens zwei Empfangssegmente zur Erzeugung von jeweiligen Empfangssignalen auf, wobei die Empfangssegmente jeweils parallel zur Bewegungsrichtung nebeneinander angeordnet sind. Zusätzlich weist die Auswerteeinheit eine Einrichtung zur Bestimmung der Bewegungsrichtung und/oder der Bewegungsgeschwindigkeit aus den Empfangssignalen wenigstens eines Lichtempfängers auf. Durch die Art der Anordnung der Empfangssegmente parallel zur Bewegungsrichtung erfolgt bei Durchtritt eines Objekts durch den Überwachungsbereich zeitlich versetzt zu einander eine Unterbrechung der entsprechenden Lichtwege und eine Abdeckung der verschiedenen Empfangssegmente. Durch Auswertung der Signale der Empfangssegmente ist somit eine Bestimmung der Bewegungsrichtung und/oder der Bewegungsgeschwindigkeit möglich.

Die Möglichkeit, die Bewegungsrichtung und/oder die Bewegungsgeschwindigkeit auszuwerten, erfolgt somit mit einem einzigen Lichtgitter, während gemäß dem Stand der Technik ein zusätzliches horizontal oder schräggestellt montiertes Lichtgitter benötigt wird, welches zusätzlichen, in der Regel nicht vorhandenen Bauraum benötigt. Die erfindungsgemäße optoelektronische Sensoranordnung realisiert die Möglichkeit, die Bewegungsrichtung und/oder die Bewegungsgeschwindigkeit zu ermitteln, somit mit einem sehr geringen Platzbedarf.

Vorzugsweise ist die Einrichtung geeignet, aus der Differenz der Empfangssignale der Empfangssegmente eines Lichtempfängers die Bewegungsrichtung und/oder die Bewegungsgeschwindigkeit zu bestimmen. Diese Auswertung beruht darauf, dass die einzelnen Empfangssegmente zeitlich nacheinander abgedeckt werden und somit die Differenz je nach Bewegungsrichtung positiv oder negativ ausfällt, während ohne Objekt im Überwachungsbereich die Differenz der Empfangssignale im Wesentlichen 0 sein sollte oder einen entsprechenden Schwellwert unterschreitet.

Bei einer alternativen Ausführungsform ist die Einrichtung geeignet, aus der Intensitätsveränderung der Empfangssignale in Abhängigkeit von der Zeit die Bewegungsrichtung und/oder die Bewegungsgeschwindigkeit zu bestimmen. Dabei werden die Intensitätsveränderungen der Empfangssignale der einzelnen Empfangssegmente relativ zu den anderen Empfangssegmenten ermittelt. Somit werden bei dieser Alternative die Änderungen des Fotostroms in Abhängigkeit von der Zeit ausgewertet und dadurch die Bewegungsrichtung und/oder die Bewegungsgeschwindigkeit ermittelt.

Bei einer besonders vorteilhaften Ausführungsgestaltung der Erfindung weist jeder Lichtempfänger mehrere Empfangssegmente auf und ist insbesondere als Fotodiodenmatrix oder CCD-Sensor ausgebildet. Dadurch kann der Lichtempfänger weiterhin sehr kompakt aufgebaut sein.

Vorzugsweise ist vor wenigstens einem der Lichtsender, vorzugsweise vor allen Lichtsendern eine Sendeoptik angeordnet, welche das von den Lichtsendern emittierte Licht entsprechend bündelt und ausrichtet. Vorzugsweise ist vor wenigstens einem der Lichtempfänger, insbesondere vor allen Lichtempfängern eine Empfangsoptik angeordnet, welche das einfallende Licht auf den Lichtempfänger fokussiert. Dabei ist die Empfangsoptik vor den Lichtempfängern besonders bevorzugt derart ausgebildet, dass jedes Empfangssegment eines der Lichtempfänger eine eigene Empfangsoptik aufweist, die das einfallende Licht auf jedes der Empfangssegmente lenkt.

Vorzugsweise weist die optoelektronische Sensoranordnung mehrere Lichtsender und/oder mehrere Lichtempfänger, insbesondere etwa 100 bis 200 Lichtsender und/oder Lichtempfänger, auf. Auf diese Weise wird ein hochauflösendes Lichtgitter gebildet. diese Weise wird ein hochauflösendes Lichtgitter gebildet.

Besonders bevorzugt ist die optoelektronische Sensoranordnung zur Sicherheitsüberwachung einer Anlage oder einer Maschine geeignet. Dazu ist vorzugsweise die optoelektronische Sensoranordnung als Sensoranordnung der Steuerungskategorie 3 oder 4 gemäß der Norm EN 954 ausgebildet. Insbesondere bei derartigen Sicherheitssensoren bietet die Möglichkeit, die Bewegungsrichtung und/oder die Bewegungsgeschwindigkeit zu ermitteln, die Möglichkeit, die Sicherheit weiter zu erhöhten.

Vorzugsweise ist die Einrichtung der Auswerteeinheit geeignet, zur Bestimmung der Bewegungsrichtung und/oder der Bewegungsgeschwindigkeit die Empfangssignale wenigstens zweier Lichtempfänger unabhängig voneinander auszuwerten. Dadurch wird es ermöglicht, die Bewegungsrichtung und/oder die Bewegungsgeschwindigkeit in zwei Lichtstrahlen zu bestimmen, wodurch die Ermittlung zweikanalig erfolgt und somit eine höhere Sicherheit der Bewegungsrichtung und/oder der Bewegungsgeschwindigkeitsermittlung gewährleistet ist.

Ein Ausführungsbeispiel der Erfindung wird anhand der folgenden Figuren ausführlich erläutert.

Es zeigt
- Fig. 1: eine schematische Seitenansicht eines Ausführungsbeispieles einer optoelektronischen Sensoranordnung,
- Fig. 2: eine schematische Draufsicht auf die optoelektronische Sensoranordnung gemäß Figur 1 und
- Fig. 3: eine schematische Frontansicht eines Teils der optoelektronischen Sensoranordnung gemäß Figur 1.

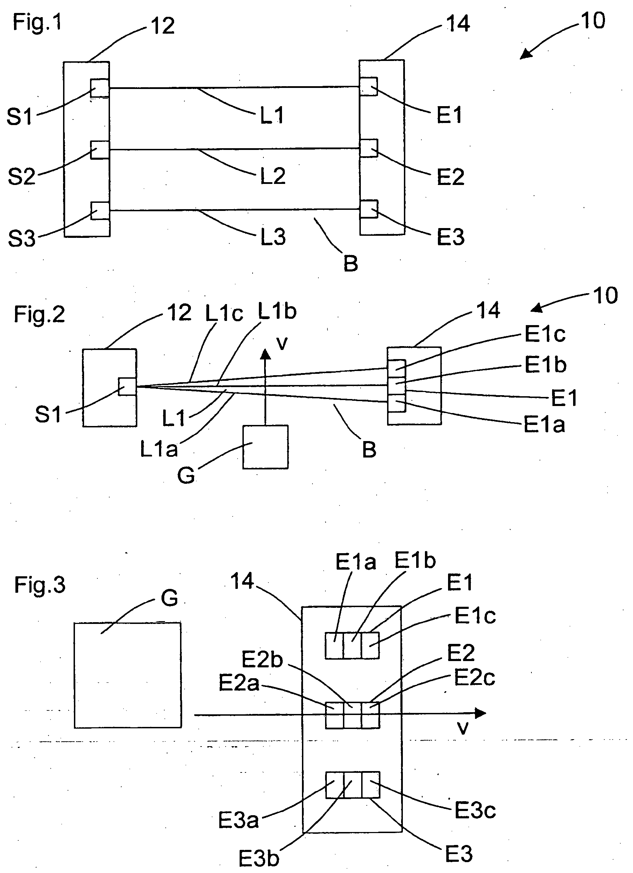

Die Figuren 1, 2 und 3 zeigen verschiedene schematische Darstellungen einer optoelektronischen Sensoranordnung 10, welche ein erstes Gehäuse 12 und ein zweites Gehäuse 14 aufweist.

In dem ersten Gehäuse 12 sind ein erster Lichtsender S1, ein zweiter Lichtsender S2 und ein dritter Lichtsender S3 angeordnet, während in dem zweiten Gehäuse 14 ein erster Lichtempfänger E1, ein zweiter Lichtempfänger E2 und ein dritter Lichtempfänger E3 angeordnet sind. Das erste Gehäuse 12 und das zweite Gehäuse 14 sind derart am Rand eines Überwachungsbereichs B angeordnet, dass die Lichtsender S1, S2, S3 und die Lichtempfänger E1, E2, E3 jeweils dem Überwachungsbereich B zugewandt sind und das von den Lichtsendern S1, S2, S3 ausgesandte Licht auf die Lichtempfänger E1, E2, E3 fällt. Zwischen dem ersten Lichtsender S1 und dem ersten Lichtempfänger E1 besteht somit ein Lichtweg L1, zwischen dem zweiten Lichtsender S2 und dem zweiten Lichtempfänger E2 der Lichtweg L2 und zwischen dem dritten Lichtsender S3 und dem dritten Lichtempfänger E3 der Lichtweg L3. Die Sensoranordnung 10 bildet somit ein Lichtgitter, welches in der schematischen Darstellung vereinfacht lediglich drei Lichtstrahlen aufweist, vorzugsweise jedoch etwa 100 bis 200 Lichtstrahlen aufweisen kann.

Wie insbesondere in Figur 2 zu sehen ist, kann der Überwachungsbereich B von einem Objekt G in eine Bewegungsrichtung v durchtreten werden. Dabei werden von Objekt G wenigstens einer oder mehrere der Lichtwege L1, L2, L3 kurzfristig unterbrochen. Eine derartige Unterbrechung eines der Lichtwege L1, L2, L3 führt zu einer Signalausgabe, dass ein Objekt G in den Überwachungsbereich B eingedrungen ist und gegebenenfalls Sicherheitsvorkehrungen getroffen werden müssen, beispielsweise eine nicht dargestellte Maschine oder Anlage in ihrer Bewegung anzuhalten oder zumindest in eine Bewegung mit geringerer Geschwindigkeit oder vermindertem Gefahrenpotential zu überführen.

Das Gehäuse 12 ist derart relativ zu der Bewegungsrichtung v angeordnet, dass die Lichtsender S1, S2, S3 quer, vorzugsweise senkrecht, zur Bewegungsrichtung v angeordnet sind. Das zweite Gehäuse 14 ist parallel versetzt auf der anderen Seite des Überwachungsbereichs B angeordnet, so dass die Lichtempfänger E1, E2, E3 ebenfalls quer, insbesondere senkrecht zur Bewegungsrichtung v angeordnet sind. Insbesondere sind im vorliegenden Beispiel bei einer horizontal erfolgenden Bewegung in Bewegungsrichtung v die Gehäuse 12, 14 derart ausgerichtet, dass die Lichtsender S1, S2, S3 bzw. die Lichtempfänger E1, E2, E3 horizontal übereinander angeordnet sind. Grundsätzlich ist es natürlich möglich, die Lichtsender S1, S2, S3 und Lichtempfänger E1, E2, E3 auf einer Seite des Überwachungsbereiches B und ihnen gegenüber einen Reflektor anzuordnen, um so die Sensoranordnung 10 als Reflexionslichtgitter auszubilden.

Wie insbesondere in den Figuren 2 und 3 dargestellt, weist der erste Lichtempfänger E3 ein erstes Empfängssegment E1a, ein zweites Empfangssegment E1b und drittes Empfangssegment E1c auf. Weiterhin weisen der zweite Lichtempfänger E2 ein erstes Empfangssegment E2a, ein zweites Empfangssegment E2b und ein drittes Empfangssegment E2C sowie der dritte Lichtempfänger E3 ein erstes Empfangssegment E3a, ein zweites Empfangssegment E3b und ein drittes Empfangssegment E3c auf. Die Empfangssegmente E1a, E1b, E1c bzw. E2a, E2b, E2c bzw. E3a, E3b, E3c eines jeden Lichtempfängers E1, E2, E3 sind jeweils parallel zur Bewegungsrichtung v nebeneinander angeordnet. Der Lichtweg L1 weist somit zwischen dem ersten Lichtsender S1 und dem ersten Empfangssegment E1a des ersten Lichtempfängers E1 einen Lichtweg L1a, zwischen dem ersten Lichtsender S1 und dem zweiten Empfangssegment E2a des ersten Lichtempfängers E1 einen Lichtweg L1b und zwischen dem ersten Lichtsender S1 und dem dritten Empfangssegment E3a des ersten Lichtempfängers E1 einen Lichtweg L1c auf. Tritt somit das Objekt G in den Überwachungsbereich B ein, deckt die vordere Kante des Objekts G zeitlich versetzt nacheinander das erste Empfangssegment E1a, das zweite Empfängssegment E1b und schließlich das dritte Empfangssegment E1c des ersten Lichtempfängers E1 ab, wie in Figur 2 zu sehen ist. Dadurch werden zeitlich versetzt nacheinander die Lichtwege L1a, L1b und L1c zwischen dem ersten Lichtsender S1 und den Empfangssegmenten E1a, E1b, E1c unterbrochen. Tritt das Objekt G aus dem Überwachungsbereich B wieder aus, kann zunächst das von dem Lichtsender S1 ausgesandte Licht wieder auf das erste Empfangssegment E1a treffen, während das zweite Empfangssegment E1b und das dritte Empfangssegment E1c noch abgedeckt sind, und erst bei weiterer Bewegung des Objekts G in Bewegungsrichtung v werden zeitlich versetzt nacheinander das zweite Empfangssegment E1b und schließlich das dritte Empfangssegment E1c wieder freigegeben.

In den Figuren nicht dargestellt sind Sende- und Empfangsoptiken. Vor jedem der Lichtsender S1, S2, S3 ist eine Sendeoptik angeordnet, die das von den Lichtsendern emittierte Licht entsprechend bündelt und ausrichtet. Vor jedem der Lichtempfänger E1, E2, E3 ist weiterhin eine Empfangsoptik angeordnet, welche das einfallende Licht auf den jeweiligen Lichtempfänger E1, E2, E3 fokussiert. Die Sendeoptiken und die Empfangsoptiken sind beispielsweise als Linse ausgebildet. In einer bevorzugten Ausführungsform ist die Empfangsoptik der Lichtempfänger E1, E2, E3 derart ausgebildet, dass jedes Empfangssegment E1a, E1b, E1c; E2a, E2b, E2c; E3a, E3b, E3c eines der Lichtempfänger E1, E2, E3 eine eigene Empfangsoptik aufweist. Dadurch ist gewährleistet, dass jedes Empfangssegment E1a, E1b, E1c; E2a, E2b, E2c; E3a, E3b, E3c optimal ausgeleuchtet ist. Beispielsweise kann die Empfangsoptik eines der Lichtempfänger E1, E2, E3 als Mehrfachlinse für jedes der Empfangssegmente E1a, E1b, E1c; E2a, E2b, E2c; E3a, E3b, E3c des entsprechenden Lichtempfängers E1, E2, E3 ausgebildet sein.

Die Sensoranordnung 10 weist eine nicht dargestellte Auswerteeinheit auf, welche eine Einrichtung zur Bestimmung der Bewegungsrichtung v und/oder der Bewegungsgeschwindigkeit aufweist. Diese Ermittlung kann anhand der Empfangssignale der Empfangssegmente E1a, E1b, E1c eines Lichtempfängers E1 erfolgen. Vorzugsweise werden jedoch, falls mehrere Lichtwege L1, L2, L3 verschiedener Lichtsender-Lichtempfängerpaare L1-S1, L2-S2, L3-S3 durch ein Objekt G unterbrochen werden, die Empfangssignale eines jeden Lichtwegs L1, L2, L3 unabhängig voneinander ausgewertet.

Bei Auswertung des ersten Lichtwegs L1 zwischen dem ersten Lichtsender S1 und dem ersten Lichtempfänger E1 kann die Auswertung in einer ersten Alternative dadurch erfolgen, dass die Differenz der Empfangssignale benachbarter Empfangssegmente, d.h. die Differenz der Empfangssignale des ersten und zweiten Empfangssegments E1a, E1b sowie des zweiten und dritten Empfangssegments E1b, E1c bestimmt werden. Dringt das Objekt G wie in Figur 2 dargestellt in den Überwachungsbereich B ein, wird zunächst der Lichtweg L1a zwischen dem ersten Lichtsender S1 und dem ersten Empfangssegment E1a des ersten Lichtempfängers E1 unterbrochen, so dass das Empfangssignal des ersten Empfangssegments E1a nahezu auf 0 oder zumindest unter einen bestimmten Schwellwert abfällt, während das zweite Empfangssegment E1b im Wesentlichen noch das volle Empfangssignal empfängt. Die Differenz der Empfangssignale überschreitet somit einen bestimmten Wert, während die Differenz der Empfangssignale der zweiten und dritten Empfangssegmente E1b, E1c, da beide Empfangssegmente E1b, E1c noch nicht abgedeckt sind, im Wesentlichen 0 sein sollte oder einen bestimmten Schwellwert unterschreitet. Bewegt sich das Objekt G weiter in den Überwachungsbereich B, so dass auch das zweite Empfangssegment E1b abgedeckt wird, wird die Differenz der Empfangssignale der ersten und zweiten Empfangssegmente E1a, E1b wiederum nahe 0 oder unterhalb eines bestimmten Schwellwerts liegen, während nun die Differenz der Empfangssignale der zweiten und dritten Empfangssegmente E1b, E1c einen bestimmten Wert überschreitet. Aus diesen Informationen kann zunächst die Bewegungsrichtung v, aus welcher das Objekt G in den Überwachungsbereich B eingetreten ist, bestimmt werden. Wird zusätzlich bestimmt, wie schnell die Bereiche zeitlich nacheinander abgedeckt werden, kann daraus auch die Bewegungsgeschwindigkeit ermittelt werden. Bei Eintritt und Austritt des Objektes G kann somit die Bewegungsrichtung v und die Bewegungsgeschwindigkeit ermittelt werden. Ist das Objekt derart groß, dass sämtliche Lichtwege L1a, L1b, L1c zwischen dem ersten Lichtsender S1 und den Empfangssegmenten E1a, E1b, E1c des ersten Lichtempfängers E1 gleichseitig abgedeckt werden, kann zu diesem Zeitpunkt lediglich die Anwesenheit des Objektes G detektiert werden.

Alternativ wird für jedes Empfangssegmente E1a, E1b, E1c die Änderung des Fotostromes in eine Abhängigkeit von der Zeit ermittelt und die entsprechenden Werte der einzelnen Empfangssegmente E1a, E1b, E1c miteinander verglichen, woraus ebenfalls auf die Bewegungsrichtung und die Bewegungsgeschwindigkeit v des Objekts G geschlossen werden kann. Zur besseren Veranschaulichung zeigen die Lichtempfänger E1, E2, E3 jeweils drei Empfangselemente E1a, E1b, E1c bzw. E2a, E2b, E2c bzw. E3a, E3b, E3c. Erfindungsgemäß genügen jedoch für jeden Lichtempfänger bereits zwei Empfangssegmente, um sowohl die Bewegungsrichtung v als auch die Bewegungsgeschwindigkeit bestimmen zu können. Allerdings wird die Genauigkeit der Geschwindigkeitsermittlung erhöht, wenn mehrere Empfangssegmente parallel zur Bewegungsrichtung v nebeneinander angeordnet sind, so dass die Lichtempfänger E1, E2, E3 vorzugsweise als Fotodiodenmatrix oder CCD-Sensor ausgebildet sind.

Damit die Sensorenanordnung 10 gängigen Sicherheitsanforderungen genügt und insbesondere als Sicherheitssensoranordnung verwendet werden kann, ist eine zweikanalige Bestimmung der Bewegungsrichtung v und der Bewegungsgeschwindigkeit vonnöten. Dies wird dadurch gegeben, dass in jedem Lichtweg L1, L2, L3 eine Ermittlung der Bewegungsrichtung v und der Bewegungsgeschwindigkeit unabhängig von den anderen Lichtwegen L1, L2, L3 erfolgen kann. Wie in Fig. 3 dargestellt, deckt beispielsweise das Objekt G sowohl den ersten Lichtempfänger E1 als auch den zweiten Lichtempfänger E2 ab. Die Bewegungsrichtung v und Bewegungsgeschwindigkeit kann somit einerseits anhand der von den Empfangssegmenten E1a, E1b, E1c des ersten Lichtempfängers E1 detektierten Empfangssignale ermittelt werden. Zusätzlich können unabhängig von dieser Auswertung die von den Empfangssegmenten E2a, E2b, E2c des zweiten Lichtempfängers E2 detektierten Empfangssignale zur Bestimmung der Bewegungsrichtung v und der Bewegungsgeschwindigkeit herangezogen werden.

### Bezugszeichenliste

- 10: Sensoranordnung
- 12: erstes Gehäuse
- 14: zweites Gehäuse

- S1: erster Lichtsender
- S2: zweiter Lichtsender
- S3: dritter Lichtsender

- E1: erster Lichtempfänger
- E1a: erstes Empfangssegment
- E1b: zweites Empfangssegment
- E1c: drittes Empfangssegment

- E2: zweiter Lichtempfänger
- E2a: erstes Empfängssegment
- E2b: zweites Empfangssegment
- E2c: drittes Empfangssegment

- E3: dritter Lichtempfänger
- E3a: erstes Empfangssegment
- E3b: zweites Empfangssegment E3c drittes Empfangssegment

- L1: Lichtweg
- L1a: Lichtweg
- L1b: Lichtweg
- L1c: Lichtweg
- L2: Lichtweg
- L3: Lichtweg

- v: Bewegungsrichtung

- B: Überwachungsbereich

- G: Objekt

## Patentansprüche

1. Optoelektronische Sensoranordnung (10) mit wenigstens zwei Lichtsendern (S1, S2, S3) zum Aussenden von Licht in einen Überwachungsbereich (B), welcher von Objekten (G) in einer Bewegungsrichtung (v) durchquert wird, mit wenigstens zwei Lichtempfängern (E1, E2, E3) zum Empfang von Licht aus dem Überwachungsbereich (B) und zur Erzeugung von Empfangssignalen, und mit einer Auswerteeinheit zum Auswerten der Empfangssignale, wobei die Lichtsender (S1, S2, S3) und die Lichtempfänger (E1, E2, E3) jeweils quer zur Bewegungsrichtung (v) nebeneinander angeordnet sind,
**dadurch gekennzeichnet, dass** wenigstens einer der Lichtempfänger (E1, E2, E3) wenigstens zwei Empfangssegmente (E1a, E1b, E1c; E2a, E2b, E2c; E3a, E3b, E3c) zur Erzeugung von jeweiligen Empfangssignalen aufweist, welche-jeweils parallel zur Bewegungsrichtung (v) nebeneinander angeordnet sind und auf die bei Bewegung des Objekts G im Überwachungsbereich in Bewegungsrichtung (v) zeitlich versetzt von demselben Lichtsender (S1, S2, S3) ausgesandtes Licht trifft, wobei die Auswerteeinheit eine Einrichtung zur Bestimmung der Bewegungsrichtung (v) und/oder der Bewegungsgeschwindigkeit aus den Empfangssignalen der Empfangssegmente (E1a, E1b, E1c; E2a, E2b, E2c; E3a, E3b, E3c) wenigstens eines Lichtempfängers (E1, E2, E3) aufweist.

2. Optoelektronische Sensoranordnung nach Anspruch 1,
**dadurch gekennzeichnet, dass** die Einrichtung geeignet ist, aus der Intensitätsveränderung der Empfangssignale der Empfangssegmente (E1a, E1b, E1c; E2a, E2b, E2c; E3a, E3b, E3c) eines Lichtempfängers (E1, E2, E3) in Abhängigkeit von der Zeit die Bewegungsrichtung (v) und/oder die Bewegungsgeschwindigkeit zu bestimmen.

3. Optoelektronische Sensoranordnung nach einem der vorhergehenden Ansprüche,
**dadurch gekennzeichnet, dass** jeder Lichtempfänger (E1, E2, E3) mehrere Empfangssegmente (E1a, E1b, E1c; E2a, E2b, E2c; E3a, E3b, E3c) aufweist, insbesondere als Fotodiodenmatrix oder CCD-Sensor ausgebildet ist.

4. Optoelektronische Sensoranordnung nach einem der vorhergehenden Ansprüche,
**dadurch gekennzeichnet, dass** vor den Lichtsendern (S1, S2, S3) eine Sendeoptik und/oder vor den Lichtempfängern (E1, E2, E3) eine Empfangsoptik angeordnet ist.

5. Optoelektronische Sensoranordnung nach einem der vorhergehenden Ansprüche,
**dadurch gekennzeichnet, dass** vor den Lichtempfängern (E1, E2, E3) eine Empfangsoptik angeordnet ist, welche derart ausgebildet ist, dass jedes Empfangssegment (E1a, E1b, E1c; E2a, E2b, E2c; E3a, E3b, E3c) eines der Lichtempfänger (E1, E2, E3) eine eigene Empfangsoptik aufweist.

6. Optoelektronische Sensoranordnung nach einem der vorhergehenden Ansprüche,
**dadurch gekennzeichnet, dass** die optoelektronische Sensoranordnung (10) mehrere Lichtsender (S1, S2, S3) und/oder mehrere Lichtempfänger (E1, E2, E3), insbesondere etwa 100 bis 200 Lichtsender und/oder etwa 100 bis 200 Lichtempfänger, aufweist.

7. Optoelektronische Sensoranordnung nach einem der vorhergehenden Ansprüche,
**dadurch gekennzeichnet, dass** die optoelektronische Sensoranordnung (10) zur Sicherheitsüberwachung einer Anlage oder einer Maschine geeignet ist.

8. Optoelektronische Sensoranordnung nach einem der vorhergehenden Ansprüche,
**dadurch gekennzeichnet, dass** die Einrichtung geeignet ist, zur Bestimmung der Bewegungsrichtung (v) und/oder der Bewegungsgeschwindigkeit die Empfangssignale der Empfangssegmente (E1a, E1b, E1c; E2a, E2b, E2c; E3a, E3b, E3c) wenigstens zweier Lichtempfänger (E1, E2, E3) unabhängig voneinander auszuwerten.

## Claims

1. An optoelectronic sensor assembly (10) having at least two light emitters (S1, S2, S3) to transmit light into a monitoring area (B) which is traversed by objects (G) in a movement direction (v), at least two light receivers (E1, E2, E3) to receive light from the monitoring area (B) and to generate reception signals, und an evaluation unit to evaluate the reception signals, wherein the light emitters (S1, S2, S3) and the light receivers (E1, E2, E3) are respectively arranged next to each other transversely to the movement direction (v),
**characterized in that** at least one of the light receivers (E1, E2, E3) includes at least two reception segments (E1a, E1b, E1c; E2a, E2b, E2c; E3a, E3b, E3c) to generate respective reception signals, respectively arranged next to each other parallel to the movement direction (v) and onto which light transmitted by the same light emitter (S1, S2, S3) strikes in a time-shifted manner upon movement of the object G in the monitoring area in the movement direction (v), wherein the evaluation unit includes a device to determine the movement direction (v) and/or the movement speed from the reception signals of the reception segments (E1a, E1b, E1c; E2a, E2b, E2c; E3a, E3b, E3c) of at least one light receiver (E1, E2, E3).

2. The optoelectronic sensor assembly according to claim 1,
**characterized in that** the device is suitable to determine the movement direction (v) and/or the movement speed from the change in intensity of the reception signals of the reception segments (E1a, E1b, E1c; E2a, E2b, E2c; E3a, E3b, E3c) of a light receiver (E1, E2, E3) as a function of time.

3. The optoelectronic sensor assembly according to any of the preceding claims,
**characterized in that** each light receiver (E1, E2, E3) includes a plurality of reception segments (E1a, E1b, E1c; E2a, E2b, E2c; E3a, E3b, E3c) and in particular is formed as a photodiode matrix or CCD sensor.

4. The optoelectronic sensor assembly according to any of the preceding claims,
**characterized in that** transmission optics are arranged in front of the light emitters (S1, S2, S3) and/or reception optics are arranged in front of the light receivers (E1, E2, E3).

5. The optoelectronic sensor assembly according to any of the preceding claims,
**characterized in that** reception optics are arranged in front of the light receivers (E1, E2, E3) which are formed such that each reception segment (E1a, E1b, E1c; E2a, E2b, E2c; E3a, E3b, E3c) of one of the light receivers (E1, E2, E3) includes its own reception optics.

6. The optoelectronic sensor assembly according to any of the preceding claims,
**characterized in that** the optoelectronic sensor assembly (10) includes a plurality of light emitters (S1, S2, S3) and/or a plurality of light receivers (E1, E2, E3), in particular about 100 to 200 light emitters and/or about 100 to 200 light receivers.

7. The optoelectronic sensor assembly according to any of the preceding claims,
**characterized in that** the optoelectronic sensor assembly is suitable for safety monitoring of a plant or a machine.

8. The optoelectronic sensor assembly according to any of the preceding claims,
**characterized in that** the device is suitable to evaluate the reception signals of the reception segments (E1a, E1b, E1c; E2a, E2b, E2c; E3a, E3b, E3c) of at least two light receivers (E1, E2, E3) independently of each other to determine the movement direction (v) and/or the movement speed.

## Revendications

1. Dispositif de capteur optoélectronique (10) comprenant au moins deux émetteurs de lumière (S1, S2, S3) pour l'émission de lumière dans une zone de surveillance (B) qui est traversée par des objets (G) dans une direction de déplacement (v), au moins deux récepteurs de lumière (E1, E2, E3) pour la réception de lumière provenant de la zone de surveillance (B) et pour générer des signaux de réception, ainsi qu'une unité d'exploitation pour exploiter les signaux de réception, les émetteurs de lumière (S1, S2, S3) et les récepteurs de lumière (E1, E2, E3) étant respectivement positionnés côte-à-côte transversalement à la direction de déplacement (v),
**caractérisé en ce qu'**
au moins l'un des récepteurs de lumière (E1, E2, E3) comprend au moins deux segments de réception (E1a, E1b, E1c, E2a, E2b, E2c, E3a, E3b, E3c) pour générer des signaux de réception respectifs qui sont respectivement positionnés côte à côte parallèlement à la direction de déplacement (v) et sur lesquels, lors du déplacement de l'objet G dans la zone de surveillance dans la direction de déplacement (v) vient frapper la lumière émise par un même émetteur de lumière (S1, S2, S3) de façon décalée dans le temps, l'unité d'exploitation comprenant un dispositif permettant de déterminer la direction de déplacement (v) et/ou la vitesse de déplacement à partir des signaux de réception des segments de réception (E1a, E1b, E1c, E2a, E2b, E2c, E3a, E3b, E3c) d'au moins l'un des récepteurs de lumière (E1, E2, E3).

2. Dispositif de capteur optoélectronique conforme à la revendication 1,
**caractérisé en ce que**
le dispositif est adapté pour déterminer la direction de déplacement (v) et/ou la vitesse de déplacement en fonction du temps à partir de la variation d'intensité des signaux de réception des segments de réception (E1a, E1b, E1c, E2a, E2b, E2c, E3a, E3b, E3c) d'un récepteur de lumière (E1, E2, E3).

3. Dispositif de capteur optoélectronique conforme à l'une des revendications précédentes,
**caractérisé en ce que**
chaque récepteur de lumière (E1, E2, E3) comprend plusieurs segments de réception (E1a, E1b, E1c, E2a, E2b, E2c, E3a, E3b, E3c) en particulier réalisés sous la forme d'une matrice de photodiodes ou d'un capteur CCD.

4. Dispositif de capteur optoélectronique conforme à l'une des revendications précédentes,
**caractérisé en ce qu'**
à l'avant des émetteurs de lumière (S1, S2, S3) est montée une optique d'émission et/ou à l'avant des récepteurs de lumière (E1, E2, E3) est montée une optique de réception.

5. Dispositif de capteur optoélectronique conforme à l'une des revendications précédentes,
**caractérisé en ce qu'**
à l'avant des récepteurs de lumière (E1, E2, E3) est montée une optique de réception qui est réalisée de sorte que chacun des segments de réception (E1a, E1b, E1c, E2a, E2b, E2c, E3a, E3b, E3c) de l'un des récepteurs de lumière (E1, E2, E3) ait une optique de réception qui lui est propre.

6. Dispositif de capteur optoélectronique conforme à l'une des revendications précédentes,
**caractérisé en ce qu'**
il comprend un grand nombre d'émetteurs de lumière (S1, S2, S3) et/ou un grand nombre de récepteurs de lumière (E1, E2, E3), en particulier environ 100 à 200 émetteurs de lumière et/ou environ 100 à 200 récepteurs de lumière.

7. Dispositif de capteur optoélectronique conforme à l'une des revendications précédentes,
**caractérisé en ce qu'**
il est adapté pour effectuer une surveillance de sécurité d'une installation ou d'une machine.

8. Dispositif de capteur optoélectronique conforme à l'une des revendications précédentes,
**caractérisé en ce que**
le dispositif est adapté pour exploiter indépendamment les uns des autres les signaux de réception des segments de réception (E1a, E1b, E1c ; E2a, E2b, E2c ; E3a, E3b, E3c) d'au moins deux récepteurs de lumière (E1, E2, E3) pour déterminer la direction de déplacement (v) et/ou la vitesse de déplacement.
